# EUROPÄISCHE PATENTSCHRIFT

(11) **EP 3 198 092 B1**
(45) Veröffentlichungstag und Bekanntmachung des Hinweises auf die Patenterteilung: **11.09.2019**
(21) Anmeldenummer: 15763036.9
(22) Anmeldetag: 16.09.2015
(51) Int. Cl.: E04H 12/10, E02B 17/00, E04H 12/00

(54) **ÜBERGANGSSTÜCK FÜR WINDENERGIEANLAGEN UND ANSCHLUSSBAUWERKE**
TRANSITION PIECE FOR WIND TURBINES AND CONNECTING STRUCTURES
PIECE DE TRANSITION POUR EOLIENNES ET STRUCTURES DE LIAISON

(30) Priorität: 25.09.2014 DE 102014219482
(43) Veröffentlichungstag der Anmeldung: 02.08.2017
(73) Patentinhaber: innogy SE, 45128 Essen (DE)
(72) Erfinder: BARTMINN, Daniel, 25335 Elmshorn (DE)
(74) Vertreter: Richly & Ritschel Patentanwälte PartG mbB
(86) Internationale Anmeldenummer: PCT/EP2015/071238
(87) Internationale Veröffentlichungsnummer: WO 2016/046046

(56) Entgegenhaltungen:
- EP-A1- 2 072 685
- EP-A1- 2 333 163
- EP-A2- 1 813 808
- WO-A1-2013/029626
- US-A1- 2014 133 921

## Beschreibung

Die vorliegende Erfindung betrifft ein Übergangsstück zum Verbinden eines zumindest drei Säulen aufweisenden ersten Bauteils mit einem turmförmigen zweiten Bauteil. Das Übergangsstück findet insbesondere bei Windkraftanlagenbauwerken Anwendung. Ferner betrifft die vorliegende Erfindung ein Bauwerk umfassend ein als Jacket ausgebildetes erstes Bauteil und ein als Turm ausgebildetes zweites Bauteil. Des Weiteren betrifft die vorliegende Erfindung ein Bauwerk umfassend ein als Anschlussbauwerk ausgebildetes erstes Bauteil und ein als Monopile ausgebildetes zweites Bauteil. Des Weiteren betrifft die vorliegende Erfindung ein Bauwerk umfassend ein als Anschlussbauwerk ausgebildetes erstes Bauteil und ein als aufgelöste Struktur oder als Suction Caison oder Schwergewichtsfundament oder Tripod oder Triple ausgebildetes zweites Bauteil.

Aus der EP 2 333 163 ist ein Offshore-Bauwerk bekannt, das ein Übergangsstück zum Verbinden einer mehrere Säulen umfassenden Gründungsstruktur (auch als Jacket benannt) mit einem Aufbau, so wie einem Anlagenteil einer Windenergieanlage, einem Turm einer Windenergieanlage oder einem Umspannwerk, umfasst. Das Übergangsstück umfasst ein zylinderförmiges Gehäuse, das stirnseitig einen kreisförmigen Verbindungsflansch mit einer Vielzahl von Schraubenöffnungen aufweist. Ein Verbindungsabschnitt des Aufbaus ist mittels des Verbindungsflansches mit dem Übergangsstück verbindbar. An der Außenseite weist das Übergangsstück radial von der Außenwand und parallel zur Längsmittelachse der Gründungsstruktur verlaufende Verbindungsplatten auf, die jeweils mit einer Säule der Gründungsstruktur verbunden sind. Die Säulen weisen jeweils Aussparungen auf, in die die Verbindungsplatten aufgenommen sind, so dass die Gründungsstruktur mit dem Übergangsstück verbunden ist.

Bei dem aus der EP 2 333 163 bekannten Übergangsstück lastet das gesamte Gewicht der Aufbaus (Anlagenteil der Windenergieanlage) bzw. des Turms (der Windenergieanlage oder des Umspannwerks) auf den Verbindungsplatten des Übergangstücks. An die Verbindung der Verbindungsplatten zum zylinderförmigen Hauptkörper des Übergangsstücks sind folglich hohe Anforderungen gestellt, insbesondere müssen im Falle einer Verschweißung der Verbindungsplatten mit dem zylinderförmigen Hauptkörper die Schweißnähte einer enormen Belastung standhalten. Ferner ist der Aufbau (Anlagenteil der Windenergieanlage) bzw. der Turm (der Windenergieanlage oder des Umspannwerks) mit dem Übergangsstück lediglich über den Verbindungsflansch verbunden, so dass bei Schwankbewegungen des Aufbaus bzw. des Turms die resultierenden Drehmomente vom Verbindungsflansch aufgenommen werden müssen.

EP 1 813 808 A2 offenbart einen Turm einer Windkraftanlage mit einem ähnlichen Übergangsstück.

Die der vorliegenden Erfindung zugrunde liegende Aufgabe ist die Bereitstellung eines stabileren Übergangsstücks zum Verbinden eines zumindest drei Säulen aufweisenden ersten Bauteils mit einem turmförmigen zweiten Bauteil.

Die der vorliegenden Erfindung zugrunde liegende Aufgabe wird durch ein Übergangsstück mit den Merkmalen des Anspruchs 1 gelöst.

Ferner ist die der vorliegenden Erfindung zugrunde liegende Aufgabe die Bereitstellung eins stabileren Bauwerks, das ein als Jacket ausgebildetes erstes Bauteil und ein als Turm ausgebildetes zweites Bauteil umfasst.

Diese Aufgabe wird durch ein Bauwerk mit den Merkmalen des Anspruchs 7 gelöst.

Des Weiteren ist die der vorliegenden Erfindung zugrunde liegende Aufgabe die Bereitstellung eines stabileren Bauwerks, das ein als Anschlussbauwerk ausgebildetes erstes Bauteil und ein als Monopile ausgebildetes zweites Bauteil umfasst. Alternativ kann das zweite Bauteil auch als Schwergewichtsfundament, als aufgelöste Struktur, die aus mehreren Einzelbauteilen zusammengesetzt ist, als Tripod, als Triple oder als Caisson ausgebildet sein.

Diese Aufgabe wird durch ein Bauwerk mit den Merkmalen des Anspruchs 8 gelöst.

Im Genaueren wird die der vorliegenden Erfindung zugrunde liegende Aufgabe durch ein Übergangsstück zum Verbinden eines zumindest drei Säulen aufweisenden ersten Bauteils mit einem turmförmigen zweiten Bauteil gelöst, wobei das Übergangsstück zwischen dem ersten Bauteil und dem zweiten Bauteil anordenbar ist und eine Verbindungseinrichtung zum Verbinden des zweiten Bauteils umfasst. Bei dem ersten Bauteil kann es sich beispielsweise um eine Gründungsstruktur, insbesondere um ein Jacket handeln. Bei dem zweiten Bauteil kann es sich beispielsweise um einen Turm einer Windenergieanlage oder eines Umspannwerks handeln. Alternativ ist es jedoch auch möglich, dass das erste Bauteil als ein Anschlussbauwerk, insbesondere als Umspannwerk, und dass das zweite Bauteil als ein Monopile ausgebildet ist. Das erfindungsgemäße Übergangsstück ist dadurch gekennzeichnet, dass dieses zumindest drei Bogenelemente umfasst, deren jeweilige Schenkel zumindest mittelbar mit dem ersten Bauteil verbindbar sind. Dabei erfolgt vorzugsweise die Verbindung der jeweiligen Schenkeln mit entsprechenden Enden der Säulen des ersten Bauteils. Ferner sind die jeweiligen Bogenelemente mittels zwischen den jeweiligen Schenkeln angeordneten konvexen Endabschnitten mit dem zweiten Bauteil in direkten Kontakt bringbar. Die konvexen Endabschnitte der Bogenelemente bilden dabei einen Aufnahmebereich des Übergangsstücks, in den das zweite Bauteil einführbar ist.

Die Verbindungseinrichtung des Übergangsstücks ist vorzugsweise als Verbindungsflansch ausgebildet. Der Aufnahmebereich, der durch die Bogenelemente gebildet ist, kann alternativ auch als Aufnahmetrichter bezeichnet werden. Selbstverständlich kann das erste Bauteil auch mehr als drei Säulen aufweisen, sodass das erfindungsgemäße Übergangsstück auch für ein Jacket, das üblicherweise vier Säulen beziehungsweise Standbeine aufweist, geeignet ist.

Das erfindungsgemäße Übergangsstück bietet den Vorteil, dass dieses im Vergleich zu aus dem Stand der Technik bekannten Übergangsstücken eine stabilere Verbindung des Übergangsstücks hin zum zweiten turmförmigen Bauteil ermöglicht. Denn die Bogenelemente dienen ebenfalls als Halte- und/oder Stützelemente für das turmförmige zweite Bauteil, sodass Schwankbewegungen eines Bauwerkes, beispielsweise einer Onshore-Windenergieanlage oder einer Offshore-Windenergieanlage, mittels der Bogenelemente entgegengewirkt werden kann. Ferner bietet das erfindungsgemäße Übergangsstück den Vorteil, dass die von dem turmförmigen zweiten Bauteil auf die Bogenelemente ausgeübten Lateralkräfte über die Schenkel der Bogenelemente hin zu den Säulen des ersten Bauteils als Axialkräfte abgeleitet werden. Lateralkräfte werden von den Bogenelementen folglich in Axialkräfte überführt, so dass die Axialkräfte besonders vorteilhaft in die Säulen des ersten Bauteils abgeleitet werden können. Somit erfährt das erfindungsgemäße Übergangsstück verminderte Spitzenbelastungen und weist folglich eine erhöhte Langzeitstabilität auf.

Vorzugsweise sind die jeweiligen Bogenelemente rohrförmig ausgebildet.

Ein entsprechend ausgebildetes Übergangsstück ist besonders einfach herstellbar. Darüber hinaus wird eine hohe Stabilität des Übergangsstücks gewährleistet, ohne unnötigerweise das Gewicht des Übergangsstücks zu erhöhen. Auch die Herstellungskosten eines entsprechend ausgebildeten Übergangsstücks sind reduziert.

Weiter vorzugsweise sind die jeweiligen Bogenelemente segmentiert und umfassen miteinander verbundene Zylindersegmente.

Durch eine entsprechende Ausbildung des Übergangsstücks können kostengünstige Zylindersegmente verwendet werden, um die Bogenelemente und das Übergangsstück herzustellen, so dass die Herstellungskosten des Übergangsstücks nochmals reduziert werden. Darüber hinaus können die Bogenelemente aufgrund deren Segmentierung unterschiedlichen Geometrien der turmförmigen zweiten Bauteile angepasst werden.

Vorzugsweise sind die jeweiligen Bogenelemente, insbesondere die Schenkel der jeweiligen Bogenelemente in Richtung einer Längsmittelachse des Übergangsstücks verkippt. Dabei schneiden sich vorzugsweise von den jeweiligen Bogenelementen definierte Symmetrieachsen in der Längsmittelachse des Übergangsstücks.

Durch eine entsprechende Verkippung der Bogenelemente beziehungsweise der jeweiligen Schenkel der jeweiligen Bogenelemente können von dem turmförmigen zweiten Bauteil auf die Bogenelemente ausgeübte Lateralkräfte besser aufgefangen und in Axialkräfte umgewandelt werden. Daher weist ein entsprechendes Übergangsstück eine nochmals erhöhte Stabilität auf.

Weiter vorzugsweise sind die konvexen Endabschnitte der jeweiligen Bogenelemente tangential an dem zweiten Bauteil zur Anlage bringbar. Durch ein tangentiales Anlegen der konvexen Endabschnitte an dem zweiten Bauteil vergrößert sich die Anlagefläche der jeweiligen Bogenelemente an dem zweiten Bauteil, so dass verbessert Kräfte von dem turmförmigen zweiten Bauteil durch die Bogenelemente aufnehmbar sind.

Gemäß einer weiteren bevorzugten Ausführung sind die konvexen Endabschnitte der jeweiligen Bogenelemente in einer zur Längsmittelachse des Übergangsstücks parallelen Ebene angeordnet.

Die jeweiligen Bogenelemente schmiegen sich folglich an der Außenfläche des zweiten Bauteils an, wenn die Außenfläche des zweiten Bauteils parallel zur Längsmittelachse des Übergangsstücks verläuft. Hierdurch wird eine größere Kontaktlänge der Bogenelemente mit dem zweiten Bauteil erreicht, so dass ein Bauwerk mit einem erfindungsgemäßen Übergangsstück eine erhöhte Stabilität aufweist.

Insbesondere ist es auch möglich, dass die jeweiligen Schenkel der jeweiligen Bogenelemente in Richtung der Längsmittelachse des Übergangsstücks verkippt sind, wobei gleichzeitig die konvexen Endabschnitte der jeweiligen Bogenelemente tangential an dem zweiten Bauteil zur Anlage bringbar sind beziehungsweise die konvexen Endabschnitte der jeweiligen Bogenelemente in einer zur Längsmittelachse des Übergangsstücks parallelen Ebene angeordnet sind. Daher weisen die Bogenelemente zusätzlich zu deren bogenartiger Krümmung eine weitere auf die Längsmittelachse gerichtete konvexe Krümmung auf.

Die der vorliegenden Erfindung zugrunde liegende Aufgabe wird auch durch ein Bauwerk gelöst, das ein als Jacket ausgebildetes erstes Bauteil und ein als Turm ausgebildetes Bauteil umfasst. Das erfindungsgemäße Bauteil ist dadurch gekennzeichnet, dass das Jacket mit dem Turm mittels eines Übergangsstücks nach einem der voran beschriebenen Ausführungsbeispiele verbunden ist, wobei ein Verbindungsabschnitt des Turms innerhalb des Aufnahmebereichs des Übergangsstücks angeordnet ist und mittels der Verbindungseinrichtung mit dem Übergangsstück verbunden ist, und wobei die Säulen des Jackets jeweils mit zwei Schenkeln zweier benachbarter Bogenelemente des Übergangsstücks zumindest mittelbar verbunden sind.

Bei dem erfindungsgemäßen Bauwerk kann es sich um ein Windenergieanlagenbauwerk, eine Windenergieanlage, ein Umspannwerk für Windenergieanlagen, jeweils in Onshore-Ausführung oder Offshore-Ausführung handeln. Das Jacket kann allgemein auch als Gründungsstruktur bezeichnet werden. Die Säulen des Jackets können auch als Standbeine bezeichnet werden.

Ein entsprechend ausgebildetes Bauwerk ist besonders stabil, da das Übergangsstück laterale Bewegungen des Turms in axiale Kräfte überführen kann, die über die Säulen des Jackets abgeleitet werden. Ferner bietet das Bauwerk den Vorteil, dass der untere Bereich des Turms aufgrund der Bogenelemente weiterhin frei zugänglich ist, sodass dort Zugangsöffnungen bereit gestellt sein können.

Die der vorliegenden Erfindung zugrunde liegende Aufgabe wird auch durch ein Bauwerk gelöst, das ein als Anschlussbauwerk gebildetes erstes Bauteil und ein als Monopile ausgebildetes zweites Bauteil umfasst. Das erfindungsgemäße Bauwerk ist dadurch gekennzeichnet, dass das Anschlussbauwerk mit dem Monopile mittels eines Übergangsstücks gemäß einem der oben beschriebenen Ausführungsbeispiele verbunden ist, wobei ein Verbindungsabschnitt des Monopiles innerhalb des Aufnahmebereichs des Übergangsstücks angeordnet ist und mittels der Verbindungseinrichtung mit dem Übergangsstück verbunden ist, und wobei die Säulen des Anschlussbauwerks jeweils mit zwei Schenkeln von zwei benachbarter Bogenelemente des Übergangsstücks zumindest mittelbar verbunden sind.

Bei dem Anschlussbauwerk kann es sich im Allgemeinen um ein sogenanntes Topside, beispielsweise ein Umspannwerk, handeln. Die Säulen des Anschlussbauwerks können auch als Eckstreben bezeichnet werden. Das Monopile ist im Erdboden oder im Meeresuntergrund verankert.

Vorzugsweise sind an einer Außenfläche eines Verbindungsabschnitts des turmförmigen zweiten Bauteils der Form der Bogenelemente entsprechende Vertiefungen ausgebildet, sodass die jeweiligen Endabschnitte der Bogenelemente in den entsprechenden Vertiefungen aufgenommen sind.

Durch eine entsprechende Ausbildung des zweiten turmförmigen Bauteils weist das so gebildete Bauwerk eine erhöhte Stabilität auf, da die Kontaktfläche beziehungsweise der Kontaktbereich zwischen den Bogenelementen und der Außenfläche des zweiten Bauteils vergrößert ist.

Vorzugsweise ist ein Zwischenraum zwischen zwei zueinander benachbarten konvexen Endabschnitten und einer Außenfläche eines Verbindungsabschnitts des zweiten Bauteils mit einer Verkleidung verschlossen.

Durch eine entsprechende Verkleidung weist das so ausgebildete Bauwerk eine erhöhte Windschlüpfrigkeit auf, sodass Lateralbewegungen des Bauwerks beispielsweise durch Wind vermindert werden. Insgesamt erhöht sich dadurch nochmals die Stabilität des Bauwerks.

Vorzugsweise ist in dem sich innerhalb des Aufnahmebereichs des Übergangsstücks befindlichen turmförmigen zweiten Bauteil zumindest eine Zugangsöffnung zum Zugang in das zweite Bauteil (30) angeordnet ist.

Dies bietet den Vorteil, dass die Stabilität des Übergangsstücks und insbesondere des Bauwerks trotz Bereitstellung einer Zugangsöffnung, beispielsweise einer Tür, nicht vermindert wird.

Weitere Vorteile, Einzelheiten und Merkmale der Erfindung ergeben sich nachfolgend aus dem erläuterten Ausführungsbeispiel. Dabei zeigt im Einzelnen:

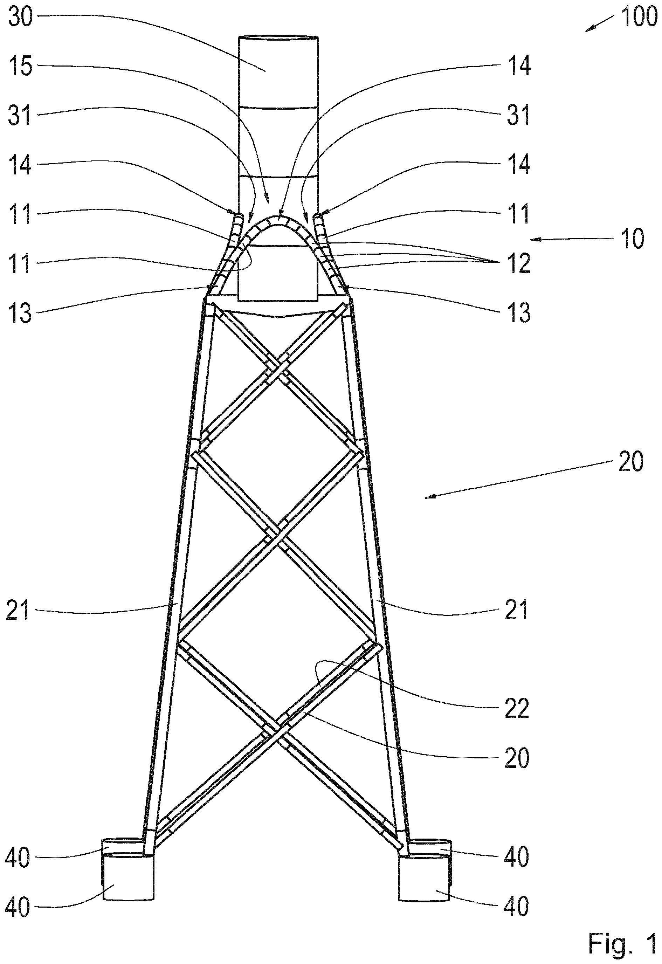

- Figur 1:: eine schematische Darstellung eines erfindungsgemäßen Bauwerks umfassend ein als Jacket ausgebildetes erstes Bauteil, ein als Turm ausgebildetes zweites Bauteil und ein erfindungsgemäßes Übergangsstück zum Verbinden des ersten Bauteils mit dem zweiten Bauteil.

Figur 1 zeigt ein als Windenergieanlage 100 ausgebildetes Bauwerk 100, das ein erstes Bauteil 20 und ein zweites turmartiges Bauteil 30 umfasst. Dabei ist das erste Bauteil 20 als Jacket 20 und das zweite Bauteil 30 ist als Turm 30 der Windenergieanlage 100 ausgebildet, wobei der obere Bereich der Windenergieanlage 100 mit der Gondel und dem Rotor nicht dargestellt ist. Wie aus Figur 1 ersichtlich ist, umfasst das Jacket 20 vier Säulen 21, die mittels Querstreben 22 miteinander verbunden und stabilisiert sind. Die Querstreben 22 verlaufen dabei zwischen benachbarten Säulen 21 und auch zwischen diagonal gegenüberliegend stehenden Säulen 21. Die unteren Enden der Säulen 21 sind mit Gründungspfählen 40 verbunden, die im Falle einer Offshore-Windenergieanlage 100 im Meeresboden eingebracht sein können.

Jedoch ist auch eine andere Geometrie eines Jackets 20, das im Allgemeinen auch als Gründungsstruktur 20 bezeichnet werden kann, denkbar. Beispielsweise kann ein Jacket 20 eines erfindungsgemäßen Bauwerks 100 auch lediglich drei Säulen 21 oder auch mehr als vier Säulen 21 aufweisen.

Zwischen dem Jacket 20 und dem Turm 30 ist ein Übergangsstück 10 angeordnet, wobei das Übergangsstück 10 zum Verbinden des Jackets 20 mit dem Turm 30 ausgebildet ist. Obschon aus Figur 1 nicht ersichtlich, umfasst das Übergangsstück eine Verbindungseinrichtung, mittels der das Übergangsstück 10 mit dem Turm 30 verbindbar ist. Diese Verbindungseinrichtung 30 ist vorzugsweise als Verbindungsflansch ausgebildet und aus dem Stand der Technik hinlänglich bekannt, sodass auf eine entsprechende Beschreibung verzichtet wird.

Aus Figur 1 ist ferner ersichtlich, dass das Übergangsstück 10 vier Bogenelemente 11 umfasst, deren jeweilige Schenkel 13 mit dem Jacket 20 und dort insbesondere mit den Säulen 21 verbunden sind. Dabei spannt sich jedes Bogenelement 11 zwischen jeweils zwei zueinander benachbarten Säulen 21, so dass folglich jede Säule 21 des Jackets 20 mit jeweils zwei Schenkeln 13 zweier unterschiedlicher Bogenelemente 11 verbunden ist. Die jeweiligen Bogenelemente 11 stehen mittels zwischen den jeweiligen Schenkeln 13 angeordneten konvexen Endabschnitten 14 mit der Außenfläche des Turms 30 in direktem Kontakt. Die konvexen Endabschnitte 14 der Bogenelemente 11 bilden somit einen Aufnahmebereich 15 des Übergangsstücks 10, in den der Turm 30 eingeführt ist. Die konvexen Endabschnitte 14 können auch als Halteabschnitte 14 der Bogenelemente 11 bezeichnet werden.

Aufgrund der Bereitstellung der Bogenelemente 11 werden Lateralbewegungen des Turms 30 von den jeweiligen Bogenelementen 11 aufgefangen und in Axialkräfte umgewandelt, die von den Schenkeln 13 in die Säulen 21 des Jackets 20 abgeleitet werden. Somit werden Schwankbewegungen des Turms 30 reduziert, wobei eine vorteilhafte Krafteinbringung in die Säulen 21 des Jackets 20 erreicht wird, ohne dass Verbindungsstellen, beispielsweise Schweißverbindungen, zwischen dem Übergangsstück 10 und dem Jacket 20 überhöhten Kräften ausgesetzt werden.

Wie aus Figur 1 ferner ersichtlich ist, umfassen die jeweiligen Bogenelemente 11 eine Vielzahl von miteinander verbundenen Zylindersegmenten 12, die vorzugsweise miteinander zu den jeweiligen Bogenelementen 11 verschweißt sind. Folglich sind die Bogenelemente 11 rohrförmig ausgebildet.

Ferner ist aus Figur 1 ersichtlich, dass die jeweiligen Schenkel 13 der jeweiligen Bogenelemente 11 in Richtung einer Längsmittelachse des Übergangsstücks 10 verkippt sind. Die konvexen Endabschnitte 14 der jeweiligen Bogenelemente 11 liegen hingegen tangential an der Außenfläche des Turms 30 an und sind in dem in Figur 1 dargestellten Ausführungsbeispiel in einer zur Längsmittelachse des Übergangsstücks 10 parallelen Ebene angeordnet.

Dadurch ergibt sich ein größerer Kontaktbereich zwischen den Bogenelementen 11 und dem Turm 30, sodass eine verbesserte Kraftübertragung von dem Turm 30 auf die Bogenelemente 11 ermöglicht ist.

Obschon aus Figur 1 nicht ersichtlich, sind an der Außenfläche eines mit den Bogenelementen 11 in Verbindung stehenden Verbindungsabschnitts des Turms 30 der Form der konvexen Endabschnitte 14 entsprechende Vertiefungen vorgesehen, sodass die jeweiligen konvexen Endabschnitte 14 der Bogenelemente 11 in den Vertiefungen angeordnet sind. Dadurch ergibt sich eine nochmals vergrößerte Kontaktfläche zwischen den Bogenelementen 11 und dem Turm 30, sodass auf den Turm 30 ausgeübte Kräfte nochmals verbessert über die Bogenelemente 11 in die Säulen 21 des Jackets 20 abgeführt werden können.

### Bezugszeichenliste:

- 10: Übergangsstück
- 11: Bogenelement
- 12: Zylindersegment
- 13: Schenkel (des Bogenelements)
- 14: konvexer Endabschnitt (des Bogenelements)
- 15: Aufnahmebereich
- 20: erstes Bauteil / Jacket / Monopile
- 21: Säule des Jackets / Standbein des Jackets
- 22: Querstrebe (des Jackets)
- 30: zweites Bauteil / Turm / Anschlussbauwerk
- 31: Zwischenraum
- 40: Gründungspfahl

## Patentansprüche

1. Übergangsstück (10) zum Verbinden eines zumindest drei Säulen (21) aufweisenden ersten Bauteils (20) mit einem turmförmigen zweiten Bauteil (30), wobei das Übergangsstück (10) zwischen dem ersten Bauteil (20) und dem zweiten Bauteil (30) anordenbar ist und eine Verbindungseinrichtung zum Verbinden des zweiten Bauteils (30) umfasst, wobei das Übergangsstück (10) durch folgende Merkmale **gekennzeichnet** ist:
- das Übergangsstück (10) umfasst zumindest drei Bogenelemente (11), deren jeweilige Schenkel (13) zumindest mittelbar mit dem ersten Bauteil (20) verbindbar sind;
- die jeweiligen Bogenelemente (11) sind mittels zwischen den jeweiligen Schenkeln (13) angeordneten konvexen Endabschnitten (14) mit dem zweiten Bauteil (30) in direkten Kontakt bringbar; und
- die konvexen Endabschnitte (14) der Bogenelemente (11) bilden einen Aufnahmebereich (15) des Übergangsstücks (10), in den das zweite Bauteil (30) einführbar ist.

2. Übergangsstück (10) nach Anspruch 1, **dadurch gekennzeichnet, dass** die jeweiligen Bogenelemente (11) rohrförmig ausgebildet sind.

3. Übergangsstück (10) nach einem der vorhergehenden Ansprüche, **dadurch gekennzeichnet, dass** die jeweiligen Bogenelemente (11) segmentiert sind und miteinander verbundenen Zylindersegmente (12) umfassen.

4. Übergangsstück (10) nach einem der vorhergehenden Ansprüche, **dadurch gekennzeichnet, dass** die jeweiligen Bogenelemente (11), insbesondere die Schenkel (13) der jeweiligen Bogenelemente (11) in Richtung einer Längsmittelachse des Übergangsstücks (10) verkippt sind.

5. Übergangsstück (10) nach einem der vorhergehenden Ansprüche, **dadurch gekennzeichnet, dass** die konvexen Endabschnitte (14) der jeweiligen Bogenelemente (11) tangential an dem zweiten Bauteil (30) zur Anlage bringbar sind.

6. Übergangsstück (10) nach einem der vorhergehenden Ansprüche, **dadurch gekennzeichnet, dass** die konvexen Endabschnitte (14) der jeweiligen Bogenelemente (11) in einer zur Längsmittelachse des Übergangsstücks (10) parallelen Ebene angeordnet sind.

7. Bauwerk (100), umfassend ein als Jacket (20) ausgebildetes erstes Bauteil (20) und ein als Turm (30) ausgebildetes zweites Bauteil (30), **dadurch gekennzeichnet, dass** das Jacket (20) mit dem Turm (30) mittels eines Übergangsstücks (10) nach einem der Ansprüche 1 bis 6 verbunden ist, wobei ein Verbindungsabschnitt des Turms (30) innerhalb des Aufnahmebereichs (15) des Übergangsstücks (10) angeordnet ist und mittels der Verbindungseinrichtung mit dem Übergangsstück (10) verbunden ist, und wobei die Säulen (21) des Jackets (20) jeweils mit zwei Schenkeln (13) zweier benachbarter Bogenelemente (11) des Übergangsstücks (10) zumindest mittelbar verbunden sind.

8. Bauwerk, umfassend ein als Anschlussbauwerk ausgebildetes erstes Bauteil (20) und ein als Monopile ausgebildetes zweites Bauteil (30), **dadurch gekennzeichnet, dass** das Anschlussbauwerk mit dem Monopile mittels eines Übergangsstücks (10) nach einem der Ansprüche 1 bis 6 verbunden ist, wobei ein Verbindungsabschnitt des Monopiles innerhalb des Aufnahmebereichs (15) des Übergangsstücks (10) angeordnet ist und mittels der Verbindungseinrichtung mit dem Übergangsstück (10) verbunden ist, und wobei die Säulen des Anschlussbauwerks jeweils mit zwei Schenkeln (13) zweier benachbarter Bogenelemente (11) des Übergangsstücks (10) zumindest mittelbar verbunden sind.

9. Bauwerk (100) nach Anspruch 7 oder 8, **dadurch gekennzeichnet, dass** an einer Außenfläche eines Verbindungsabschnitts des zweiten turmförmigen Bauteils (30) der Form der Bogenelemente (11) entsprechende Vertiefungen angeordnet sind, so dass die jeweiligen Endabschnitte (14) der Bogenelemente (11) in den entsprechenden Vertiefungen aufgenommen sind.

10. Bauwerk (100) nach einem der Ansprüche 7 bis 9, **dadurch gekennzeichnet, dass** ein Zwischenraum (31) zwischen zueinander benachbarten konvexen Endabschnitten (14) und einer Außenfläche eines Verbindungsabschnitts des zweiten Bauteils (30) mit einer Verkleidung verschlossen ist.

11. Bauwerk (100) nach einem der Ansprüche 7 bis 10, **dadurch gekennzeichnet, dass** in dem sich innerhalb des Aufnahmebereichs (15) des Übergangsstücks (10) befindlichen turmförmigen zweiten Bauteils (30) zumindest eine Zugangsöffnung zum Zugang in das zweite Bauteil (30) angeordnet ist.

## Claims

1. A transition piece (10) for connecting a first component (20) having at least three columns (21) to a tower-shaped second component (30), wherein the transition piece (10) can be arranged between the first component (20) and the second component (30) and comprises a connecting device for connecting the second component (30), wherein the transition piece (10) is **characterized by** the following features:
- the transition piece (10) comprises at least three arcuate elements (11) whose respective legs (13) can be at least indirectly connected to the first component (20);
- the respective arcuate elements (11) can be brought into direct contact with the second component (30) by means of convex end portions (14) arranged between the respective legs (13); and
- the convex end portions (14) of the arcuate elements (11) form a receiving region (15) of the transition piece (10), and the second component (30) can be introduced into this receiving region.

2. The transition piece (10) as claimed in claim 1, **characterized in that** the respective arcuate elements (11) are of tubular design.

3. The transition piece (10) as claimed in one of the preceding claims, **characterized in that** the respective arcuate elements (11) are segmented and comprise interconnected cylinder segments (12).

4. The transition piece (10) as claimed in one of the preceding claims, **characterized in that** the respective arcuate elements (11), in particular the legs (13) of the respective arcuate elements (11), are tilted in the direction of a longitudinal center axis of the transition piece (10).

5. The transition piece (10) as claimed in one of the preceding claims, **characterized in that** the convex end portions (14) of the respective arcuate elements (11) can be brought to bear tangentially on the second component (30) .

6. The transition piece (10) as claimed in one of the preceding claims, **characterized in that** the convex end portions (14) of the respective arcuate elements (11) are arranged in a plane parallel to the longitudinal center axis of the transition piece (10).

7. A structure (100), comprising a first component (20) designed as a jacket (20) and a second component (30) designed as a tower (30), **characterized in that** the jacket (20) is connected to the tower (30) by means of a transition piece (10) as claimed in one of claims 1 to 6, wherein a connecting portion of the tower (30) is arranged within the receiving region (15) of the transition piece (10) and is connected to the transition piece (10) by means of the connecting device and wherein the columns (21) of the jacket (20) are in each case at least indirectly connected to two legs (13) of two adjacent arcuate elements (11) of the transition piece (10).

8. A structure, comprising a first component (20) designed as a connecting structure and a second component (30) designed as a monopile, **characterized in that** the connecting structure is connected to the monopile by means of a transition piece (10) as claimed in one of claims 1 to 6, wherein a connecting portion of the monopile is arranged within the receiving region (15) of the transition piece (10) and is connected to the transition piece (10) by means of the connecting device, and wherein the columns of the connecting structure are in each case at least indirectly connected to two legs (13) of two adjacent arcuate elements (11) of the transition piece (10).

9. The structure (100) as claimed in claim 7 or 8, **characterized in that** depressions corresponding to the shape of the arcuate elements (11) are arranged on an outer surface of a connecting portion of the second tower-shaped component (30), with the result that the respective end portions (14) of the arcuate elements (11) are accommodated in the corresponding depressions.

10. The structure (100) as claimed in one of claims 7 to 9, **characterized in that** an interspace (31) between mutually adjacent convex end portions (14) and an outer surface of a connecting portion of the second component (30) is closed by a cladding.

11. The structure (100) as claimed in one of claims 7 to 10, **characterized in that** at least one access opening for access into the second component (30) is arranged in the tower-shaped second component (30) situated within the receiving region (15) of the transition piece (10).

## Revendications

1. Pièce de transition (10) destinée à relier un premier composant (20) présentant au moins trois colonnes (21) à un second composant (30) en forme de tour, dans laquelle la pièce de transition (10) peut être disposée entre le premier composant (20) et le second composant (30) et comprend un dispositif de liaison pour relier le second composant (30), dans laquelle la pièce de transition (10) présente les caractéristiques suivantes:
- la pièce de transition (10) comprend au moins trois éléments d'arc (11), dont les branches respectives (13) peuvent être reliées au moins indirectement au premier composant (20);
- les éléments d'arc respectifs (11) peuvent être mis en contact direct avec le second composant (30) au moyen de parties d'extrémité convexes (14) disposées entre les branches respectives (13); et
- les parties d'extrémité convexes (14) des éléments d'arc (11) forment une région de logement (15) de la pièce de transition (10), dans laquelle le second composant (30) peut être introduit.

2. Pièce de transition (10) selon la revendication 1, **caractérisée en ce que** les éléments d'arc respectifs (11) sont réalisés en forme de tubes.

3. Pièce de transition (10) selon l'une quelconque des revendications précédentes, **caractérisée en ce que** les éléments d'arc respectifs (11) sont segmentés et comprennent des segments de cylindre (12) assemblés les uns aux autres.

4. Pièce de transition (10) selon l'une quelconque des revendications précédentes, **caractérisée en ce que** les éléments d'arc respectifs (11), en particulier les branches (13) des éléments d'arc respectifs (11), sont inclinés en direction d'un axe central longitudinal de la pièce de transition (10).

5. Pièce de transition (10) selon l'une quelconque des revendications précédentes, **caractérisée en ce que** les parties d'extrémité convexes (14) des éléments d'arc respectifs (11) peuvent être appliquées tangentiellement sur le second composant (30).

6. Pièce de transition (10) selon l'une quelconque des revendications précédentes, **caractérisée en ce que** les parties d'extrémité convexes (14) des éléments d'arc respectifs (11) sont disposées dans un plan parallèle à l'axe central longitudinal de la pièce de transition (10).

7. Structure (100), comprenant un premier composant (20) réalisé sous forme d'enveloppe (20) et un second composant (30) réalisé sous forme de tour (30), **caractérisée en ce que** l'enveloppe (20) est reliée à la tour (30) au moyen d'une pièce de transition (10) selon l'une quelconque des revendications 1 à 6, dans laquelle une partie de liaison de la tour (30) est disposée à l'intérieur de la région de logement (15) de la pièce de transition (10) et est assemblée à la pièce de transition (10) au moyen du dispositif de liaison, et dans laquelle les colonnes (21) de l'enveloppe (20) sont assemblées au moins indirectement respectivement à deux branches (13) de deux éléments d'arc voisins (11) de la pièce de transition (10).

8. Structure, comprenant un premier composant (20) réalisé sous forme de structure de liaison et un second composant (30) réalisé sous forme de monopile, **caractérisée en ce que** la structure de liaison est assemblée à la monopile au moyen d'une pièce de transition (10) selon l'une quelconque des revendications 1 à 6, dans laquelle une partie de liaison de la monopile est disposée à l'intérieur de la région de logement (15) de la pièce de transition (10) et est assemblée à la pièce de transition (10) au moyen du dispositif de liaison, et dans laquelle les colonnes de la structure de liaison sont assemblées au moins indirectement respectivement à deux branches (13) de deux éléments d'arc voisins (11) de la pièce de transition (10).

9. Structure (100) selon une revendication 7 ou 8, **caractérisée en ce que** des creux correspondant à la forme des éléments d'arc (11) sont disposés sur une surface extérieure d'une partie de liaison du second composant en forme de tour (30), de telle manière que les parties d'extrémité respectives (14) des éléments d'arc (11) soient logées dans les creux correspondants.

10. Structure (100) selon l'une quelconque des revendications 7 à 9, **caractérisée en ce qu'**un espace intermédiaire (31) entre des parties d'extrémité convexes (14) voisines l'une de l'autre et une surface extérieure d'une partie de liaison du second composant (30) est fermé avec un revêtement.

11. Structure (100) selon l'une quelconque des revendications 7 à 10, **caractérisée en ce qu'**au moins une ouverture d'accès pour accéder dans le second composant (30) est disposée dans le second composant en forme de tour (30) se trouvant à l'intérieur de la région de logement (15) de la pièce de transition (10).
